# EUROPEAN PATENT APPLICATION

(11) **EP 2 312 510 A1**
(43) Date of publication of application: **20.04.2011**
(21) Application number: 09425406.7
(22) Date of filing: 14.10.2009
(51) Int. Cl.: G06Q 10/00, G06F 17/30

(54) **Method for managing safety in work places**

(71) Applicant: DBA Lab S.p.A., 31050 Villorba (TV) (IT)
(72) Inventor: De Bettin, Francesco, 31050 Villorba Treviso (IT); Da Ros, Diego, 31050 Villorba Treviso (IT); Gajo, Riccardo, 31050 Villorba Treviso (IT)
(74) Representative: Petruccelli, Davide

(57) **Abstract**

The present invention refers to a method for managing safety in workplaces. A method according to the invention includes the computerized management of the processes of qualification of suppliers, of the management of contracts and agreements, the management of the database characteristic of the workplaces, of the database characteristic of the works, the prearranging of the work tasks and startups, and site management. Also claimed is a computer program including software code portions suitable to be loaded in a processor memory to implement a method of managing safety according to the invention.

## Description

The present invention relates to a method for managing safety in workplaces.

In recent years, the subject of safety in workplaces has been a major focus of attention not only with companies and workers but also among government bodies which, in many countries, have issued precise behavioural and bureaucratic norms aimed at implementing procedures to safeguard the health and safety of workers in workplaces. For this purpose, general criteria have been adopted intending, among other aspects, to assess and eliminate, or at least to minimize, all the risks to health and safety, to provide criteria of work organization suitable for containing said risks, and to regulate the obligations, the responsibilities and the duties of the professional figures involved in the activity of the company.

Naturally, the management of safety in the workplaces implies the involvement of, and the necessity of coordinating, many professional figures, such as for example, employers, the persons in charge of accident prevention and safety services, the safety coordinators, the employees, etc. Such management determines, therefore, the assignment of precise tasks to each of the abovementioned professional figures and the performance of particular procedural, bureaucratic and control obligations. Evidently, this activity requires, in particular:
- the verification of compliance of the implemented procedures with the provisions of the Country in which the company carries out its activity;
- procedures relating to the issuing, control, storage, search and sharing of the documentation produced by the subjects involved in the safety management process;
- notification procedures and reminders to proceed;
- procedures for coordinating the activities.

Software applications are available to assist professional operators in the duties required by some specific parts of the safety management process. For example, some well-known applications allow the fast and correct preparation of technical documentation, applications for authorizations, etc., and other applications enable the automatic definition of a calendar of deadlines to complete the tasks required by the legal provisions and to advise the operator of the coming or passing of said deadlines. These applications of known type are limited to specific aspects of the safety management process in the workplaces but do not provide any assistance in the proper coordination of all the phases of said process, leaving this task exclusively to the ability and the professional preparation of the operator. These applications are therefore unsatisfactory in the scope of a complete supervision of a safety management process.

A further disadvantage of the abovementioned software applications is due to the fact that the safety management method implemented by such applications does not allow the interaction of all the professional figures involved in the process. Thus, the operator must constantly check not only his own work in the phases of the process not assisted by the known applications but also coordinate his own work with the work of the other professionals taking part in managing safety in workplaces.

Nowadays, the complexity of the procedures and the necessity of having full compliance with the provisions of the law complicate the organization of companies and weighs upon the personnel, which must be suitably educated. There is therefore a widely felt need, among the professional figures involved in the safety management process, of having an applicative instrument that takes upon itself the handling of the whole management process in an optimized and error-free manner, while limiting human intervention to simple tasks of entering data, sending/receiving documentation, and adjusting to procedures notified each time by the applicative instrument.

The task of the present invention is to meet the above need by providing a method for managing safety in workplaces that can be implemented through a computer.

ln the scope of the abovementioned task, an objective of the present invention is to provide a method of managing safety in workplaces that releases the professional figures involved in the safety management process from having to gain an in-depth knowledge of all the procedures of the whole process and that reduces at the same time the operational difficulties of such subjects by eliminating the risk of making errors.

A further objective of the present invention is to provide a method for managing safety in workplaces that allows a simple and rapid sharing of documentation and enables each user to verify the state of advancement in the process.

One still other objective of this invention is to provide a method for managing safety in the workplaces that allows the organized filing of documentation and activities, as well as of the respective authors, making such information available at any moment upon request from the user.

Another objective of the present invention is to provide a method for managing safety in the workplaces that puts at the disposal of the users guided procedures for notifying the type of duties to perform and of the documentation to supply, said method pointing out to the users any shortcomings, inconsistencies and procedural errors.

A no less important objective of the present invention is to provide an effective and reliable method of managing safety in the workplace.

The tasks and the objectives disclosed above are achieved by a method for managing safety in the workplaces having the characteristics set out in the enclosed claim 1.

The characteristics and advantages of the invention will become evident from the description given hereunder, by way of non-limiting example, with reference to the attached drawings, in which:

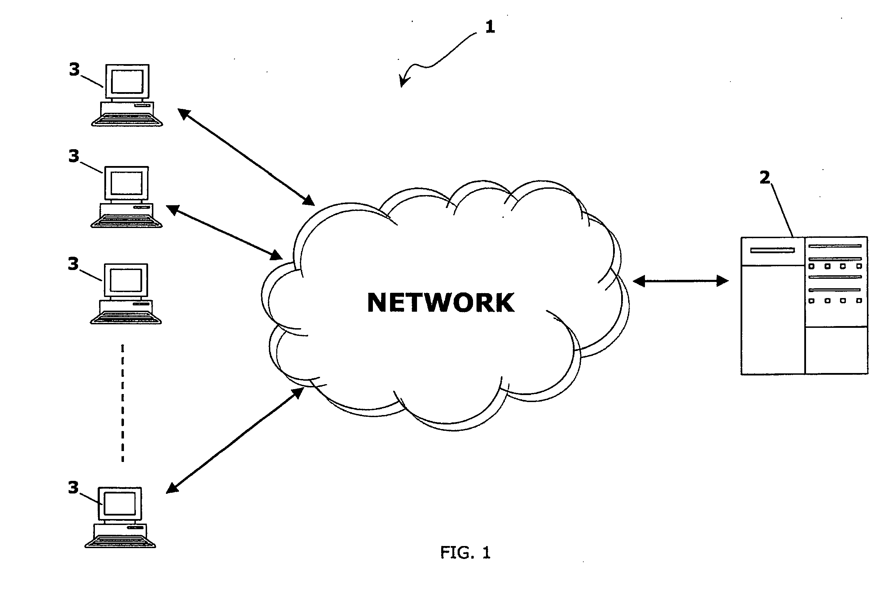

- Figure 1 illustrates schematically a managing net that actuates the method for managing safety according to the present invention.

With reference to Figure 1, number 1 indicates generally a managing net suitable for carrying out the safety management method according to the present invention, whose phases will be described hereunder. The managing net 1 includes a managing system 2 that is to be understood as a remote application which, receiving on input information contained in data, instructions, documents or similar means, performs checks and evaluations, and applies management rules, issuing procedural protocols containing information for the professional operators involved in the safety management process, such as, for example, employers, persons in charge of accident prevention and safety services, project managers, safety coordinators and so on. The managing system 2 is a computer program in the form of a software run on a digital processor, such as, for example, a server, a personal computer or a dedicated machine. Hereinafter, the term "managing system" 2 may indicate, without distinction, the application software, the digital processor or the hardware/software combination of the application and of the digital processor suitable to run such application.

The information used by the managing system 2 is, at least in part, entered by one or more users through input/output units 3, or terminals, such as, for example, a personal computer, a mobile telephone device, and similar devices. The managing system 2 can be operatively connected to the units 3 so as to enable a bidirectional exchange of data between the two units 2, 3. Preferably, the connection is operated through an intranet network or through the Internet. Therefore, the managing system 2 and the input/output units 3 can be remotely located but can be reached from the connecting network.

According to this invention, the method for managing safety in workplaces includes the following processes, which correspond to the phases of management of the method:
- Qualification of suppliers;
- Management of contracts and agreements;
- Management of database characteristic of the workplaces;
- Management of database characteristic of the works;
- Start of works and management of worksite.

The phase of qualification of suppliers is a procedure used to verify if the supplier has all the administrative and technical prerequisites necessary to be entrusted with the tasks of carrying out works or supplying services. The qualification process includes substantially the entry, the processing and the checking of information, such as registry data, administrative and technical documentation, and in particular the occupational activities for which the supplier is qualified to operate. These operations are carried out, or assisted, by the managing system 2, which, on the basis of the data received through the units 3, notifies the interested users concerning the operations that they must carry out. Preferably, the transmission of the procedural protocols, of the notifications to the users, as well as the reception of such information, can be carried out by the managing system 2 at the input/output units 3 and vice-versa, through the global Internet by prearranging a suitable web site accessible through reserved access credentials, typically a password associated with a user identification code.

The supplier qualification process is embodied in a database F, whose data (F₁, F₂, ... Fᵢ) include a set of fields Q (Q₁, Q₂, ... Qᵢ) suitable to contain information concerning activities carried out by the suppliers, that is, the professional activities that the suppliers are acknowledgedly qualified to perform.

The phase of managing contracts and agreements is a procedure with which a second database C (C₁, C₂, ... Cᵢ) is provided, in which information is collected, stored in suitable fields, such as unit prices, the responsibilities of the contracting parties, the validity of contracts, the maximum amount of the works. In particular, a set of fields Q', (Q'₁, Q'₂, ... Q'ᵢ) is provided-to contain information on the activities/works to carry out that make up the purpose of the contract.

In a preferred embodiment of the method for managing safety according to the invention, a further set S (S₁, S₂, ... Sᵢ) of fields can be provided in the data base C (C₁, C₂, ... Cᵢ) to contain information, like the company's name, and documents of technical suitability, that refer to the subcontractors to whom the supplier can transfer the responsibility of performing the contract. The method according to the invention provides that, having verified the presence of information contained in one or more fields Sᵢ, a procedural protocol will be put into action to verify the complete allocation of the information in the set of fields S (S₁, S₂, ... Si) and the issuing of a completion request signal in the case in which said verification was negative.

The definition of the databases C (C₁, C₂, ... Cᵢ), the entering, processing and verification of the complete allocation of the information, as well as the documentation to enable the verification of the suitability of the companies and that relative to the assessment of hazards are performed in a manner similar to what is described with reference to the process of qualification of suppliers. The exchange of information and data between the users and the managing system 2 also takes place according to the same procedures described with reference to the process of qualification of suppliers.

The process of managing the database characteristic of the workplaces provides for a definition of a database WP (WP₁, WP₂, ... WPᵢ) that identifies the environments, or sites, where the work is to be carried out. The workplace may or may not be the property of the employer, and this information, together with the information relative to the description of the workplace, to its geographic location (Country, City, address, etc.) and to the documentation pertaining to its identification, are memorized in suitable fields Dᵢ of the WP database. To determine if the user is either a principal or a contractor, a flag field PLᵢ, that is, a field whose value can be zero or one, or ON or OFF, is associated with each datum (WP₁, WP₂, ... WPᵢ) of the WP database. In this case, too, the exchange of information and data between the users and the managing system 2 takes place according to the procedures already described with reference to the foregoing processes.

The process of managing the database characteristic of the works requires the provision of a database L (L₁, L₂, ... Lᵢ) comprising a set of fields L' (L'ᵢ, L'₂, ... L'i) in which is memorized the information relative to the activities that will have to be carried out in the workplaces defined in the WP database. The set of fields L' also contains information such as the number of man/days expected to complete the activities to be carried out, the hazards connected with such activities and so on. Preferably, the method for managing safety according to the invention allows the definition of the database L (L₁, L₂, ... Lᵢ) only after the database WP (WP_{1,} WP₂, ... WPᵢ) has been defined and the start of the definition of the database L is stopped by the verification procedure with the emission of an error signal in the case in which there is not at least one WPᵢ datum in the WP database. Still more preferably, the method for managing safety according to the invention provides for verifying the presence of at least one field L'₁ in each datum Lᵢ and the issuing of an error signal if the condition is not verified.

Evidently, in one and the same workplace WPᵢ it may be necessary to perform a number of activities, such as for example the carrying out of masonry works, the installation of electrical systems, the installation of plumbing systems, the testing of the systems, etc. Therefore, according to the invention, the safety managing method provides for associating one or more data (WP₁, WP₂, ... WPᵢ) indicative of the places where the works will have to be carried out with the data (L₁, L₂, ... Lᵢ) comprising a set of fields L' (L'₁, L'₂, ... L'i) in which is contained the information relative to the working activities to carry out. In this manner, a further database WP-L-L' (WPLL'1, WPLL'₂, ... WPLL'i) is defined in which each of the data includes a set of three fields (WP, L, L') in which are univocally identified the works L, inclusive of the specific activities L', that will have to be carried out in the specific site, or workplace, WP. To each datum WPLL'1, WPLL'₂, ... WPLL'i of the database WP-L-L' is also associated a flag field DLᵢ, that is, a field in which the value can be zero or one, or ON or OFF. The flag field DLᵢ identifies the regulatory classification of the type of activity to carry out. In particular, the value of the DLᵢ flag is assigned by comparing the working activities L' to carry out with predetermined data tables containing the regulatory classification of the activities.

On the basis of the value contained in each of the flag fields PLᵢ and DLᵢ, or on the basis of the fact that the user appears as a principal or as a works contractor and on the basis of the regulatory classification of the type of activity to carry out, an operational macroflow MFᵢ is associated with each of the data WPLL'₁, WPLL'₂, ... WPLL'i of the database WP-L-L'. An operational macroflow MFᵢ substantially includes a plurality of operations that make it possible to manage the working activities guaranteeing safety in the workplace.

The process of prearranging the tasks manages the assignment of the works L to carry out in a workplace WP. In order to enable a work L, characterized by the activities (L'₁, L'₂, ... Lᵢ) that have to be carried out, to be assigned in compliance with safety in the workplace, it is necessary that to each qualified supplier F for a certain number of activities Q be associated a contract C for the performance of the working activities or the supply of services Q'. For this purpose, one or more data (F₁, F₂, ... Fᵢ) of the database F are associated with one or more data (C₁, C₂, ... Cᵢ) of the database C. The association of the data is carried out on the basis of the identity check of one or more fields (Q₁, Q₂, ... Qᵢ) of the set of fields Q and of one or more fields (Q'₁, Q'₂, ... Q'i) of the set of fields Q'. The result of the above data association is a further data base F-Q'-C (FQ'C₁, FQ'C₂, ... FQ'Cᵢ) which each include a set of three fields (F, Q', C), in which Q'=Q. In this manner, the safety managing method according to the invention guarantees that a contract between an employer and a supplier can be concluded for one or more jobs only and exclusively with suppliers qualified to carry out those jobs.

In the method for managing safety according to the invention, the assignment of one or more jobs to a supplier comes about by associating one or more data (WPLL'₁, WPLL'₂, ... WPLL'ᵢ), each of them including the relative operational macroflow MFᵢ, of the sixth database WP-L-L' containing the information relative to the activities to carry out in specific workplaces, with one or more data (FQ'C₁, FQ'C₂, ... FQ'Cᵢ) of the F-Q'-C database, which substantially contain the information relative to the contracts C between the employer and the suppliers F, and/or if the case may be the subcontractors S, to perform the working activities Q' for which the suppliers, and/or the possible subcontractors S, are qualified to operate. To guarantee that in each workplace WP in which works L, characterized by the activities L', have to be carried out, the work is performed only by suppliers and/or the subcontractors, if any, bound by contract and classified as subjects qualified to carry out the necessary activities L', the association between the data of the two databases WP-L-L' and F-Q'-C comes about by checking the identity between one or more fields (Q'₁, Q'₂, ... Q'ᵢ) of the Q' set of fields (L'₁, L'₂, ... L'ᵢ) of said third set of fields L' and by associating the data for which the check has a positive outcome. The result of such operation of association is a database F-Q'-C-WP-L (FQ'CWPL₁, FQ'CWPL₂, ... FQ'CWPLᵢ), in which Q'=L' which, after all, contains the information relative to the supplier F, and/or to the subcontractor S, if any, to whom is assigned the task foreseen to perform the activities Q' required by the work L' in the workplace WP in accordance with the contractual specifications C.

ln the process of prearranging the tasks, when one or more tasks have been assigned to a supplier, that is when one or more data (FQ'CWPL₁, FQ'CWPL₂, ... FQ,CWPLᵢ), preferably, the managing system 2 sends a notification signal to one of the input/output units 3 through the network 1, so that the signal can be visible to the specific supplier F given the task of performing the working activities Q'. The notification signal contains information indicating that the task has been assigned and said signal may consist of an electronic message (e-mail).

ln order to present to the user only the protocols of operations that effectively require action on his part, the process of starting the works and of managing the work site requires the selection from among the data (FQ'CWPL₁, FQ'CWPL₂, ... FQ,CWPLᵢ) of the database F-Q'-C-WP-L of those data having identical values for the WPᵢ and Lᵢ data. To these selected data is associated a subset of SPᵢ protocols of predefined operations extracted from the operational macroflow MFᵢ. In other words, said subset of protocols SP₁ is a subset of operations extracted from the larger operational macroflow MFᵢ which, in addition to the essential safety management operations to carry out on the basis of the real operating conditions (supplier F, activity to carry out Q', work contract C and so on), also contains other operations that are not pertinent to the abovementioned operating conditions and that are not presented to the user.

Preferably, once the subset of protocols SPᵢ of predefined operations is defined, a notification signal is issued containing information relative to the SP¡ subset; such signal is substantially provided to notify the user of the operations that he must perform.

According to a preferred form of the safety managing method of the invention, it is possible to define the SPᵢ subset by verifying if the L' fields (L'₁, L'₂, ... Lᵢ) of the database L in which the information relative to the working activities that will have to be carried out, and if the data (F₁, F₂, ... Fᵢ) of the database F in which the information relative to the suppliers is stored, take up particular predefined values. For example, if an activity Lᵢ to perform requires a number of man/days greater, equal or smaller than a preset number, and if a supplier Fᵢ is a company rather than a self-employed worker, the SPᵢ subset will include different groups of procedures suitable for the different situations that will arise.

Advantageously, the safety managing method according to the invention includes the possibility of carrying out the organized filing of all the transfers of information, such as communication and documentation, between the input/output units 3 and the managing system 2 and vice-versa. In this manner, the information transferred can be easily shared among the users and made available on request if needed.

Moreover, it has been noticed that the safety managing method according to the invention makes it possible to eliminate the likely procedural errors on the part of the users as it provides them all the necessary information for properly carrying out the safety management process. In addition, the method according to the invention provides for carrying out checks on the data entered and on the correct supply of the documentation by issuing alert, notification and/or error signals if any errors, inconsistencies or omissions are detected. The reliability of the safety managing method is thus guaranteed.

A person skilled in the art, with a view to meeting contingent and specific needs, may introduce many changes and variants to the above-described method for managing safety in the workplaces, which changes and variants are all included within the scope of protection of the invention as defined by the enclosed claims.

## Claims

1. Method for managing safety in workplaces, **characterized by** comprising the following phases:
a) supplying a first database F (F₁, F₂, ... Fᵢ) comprising a first set of fields Q (Q₁, D₂, ... Qᵢ) suitable to contain information concerning activities carried out;
b) supplying a second database C (C₁, C₂, ... Cᵢ) comprising a second set of fields Q', (Q'₁, Q'₂, ... Q'ᵢ) suitable to contain information concerning activities to be carried out;
c) associating one or more data (F₁, F₂, ... Fᵢ) of said first database F with one or more data (C₁, C₂, ... Cᵢ) of said second database C on the basis of the identity between one or more fields (Q₁, Q₂, ... Qᵢ) of said first set of fields Q and one or more fields (Q'₁, Q'₂, ... Q'ᵢ) of said second set of fields Q', to form a third database F-Q'-C (FQ'C₁, FQ'C₂, ... FQ'Cᵢ), each comprising a set of three fields (F, Q', C), in which Q'=Q;
d) supplying a fourth database WP (WP₁, WP₂, ... WPᵢ) containing information concerning workplaces and associating a first flag field PLᵢ with each datum (WP₁, WP₂, ... WPᵢ) of said fourth database WP;
e) supplying a fifth database L (L₁, L₂, ... Lᵢ) comprising a third set of fields L' (L'₁, L'₂, ... L'ᵢ) suitable to contain information concerning activities to be carried out;
f) associating one or more data WP (WP₁, WP₂, ... WPᵢ) of said fourth database WP with one or more data (L₁, L₂, ... Lᵢ) of said fifth database L to form a sixth database WP-L-L' (WPLL'₁, WPLL'₂, ... WPLL'ᵢ), each comprising a set of three fields (WP, L, L') and associating a second flag field DLᵢ with each datum (WPLL'₁, WPLL'₂, ... WPLL'ᵢ) of said sixth database WP-L-L';
g) on the basis of the contents of said first and second flag fields PLᵢ, DLᵢ, associating an operational macroflow (MF₁, MF₂, ... MFᵢ) with each datum (WPLL'₁, WPLL'₂, ... WPLL'ᵢ) of said sixth database WP-L-L';
h) associating one or more data (FQ'C₁, FQ'C₂, ... FQ'Cᵢ) of said third database F-Q'-C with one or more data (WPLL'₁, WPLL'₂, ... WPLL'ᵢ) subjected to phase g), on the basis of the identity between one or more fields (Q'₁, Q'₂, ... Q'ᵢ) of said second set of fields Q' and one or more fields (L'₁, L'₂, ... L'ᵢ) of said third set of fields L' to form a seventh database F-Q'-C-WP-L (FQ'CWPL1, FQ'CWPL₂, ... FQ'CWPLᵢ), in which Q'=L';
i) selecting from among the data (FQ'CWPL₁, FQ'CWPL₂, ... FQ'CWPLᵢ) of the seventh database F-Q'-C-WP-L those data that have identical values for the WPᵢ and Lᵢ data, and associating with these selected data a subset of SPᵢ protocols of predefined operations extracted from the operational macroflow (MF₁, MF₂, ... MFᵢ) associated with the selected data.

2. Method for managing safety according to claim 1, in which in phase b) the database C (C₁, C₂, ... Cᵢ) comprises a further set of fields S (S₁, S₂, ... Sᵢ) suitable for containing information concerning subcontractors and said phase b) provides for verifying the complete allocation of the information in the set of fields S (S₁, S₂, ... Sᵢ) and for issuing a completion request signal in case said verification turned out negative.

3. Method for managing safety according to claim 1 or 2, in which phase e) provides for verifying the presence of at least one field L'ᵢ in each datum Lᵢ and for issuing a first error signal if the condition is not verified.

4. Method for managing safety according to any of the previous claims, in which phase e) provides for verifying the presence of at least one datum WPᵢ in the WP database and for stopping said phase e) by issuing a second error signal if the condition is not verified.

5. Method for managing safety according to any of the previous claims, in which phase h) comprises the issuing of a notice signal containing information relative to an assigned task.

6. Method for managing safety according to any of the previous claims, in which phases d) and f) provide for assigning the value of the PLᵢ, DLᵢ flag fields, respectively, checking the contents of a field Dᵢ of the data (WP₁, WP₂, ... WPᵢ) and comparing the L' fields with predetermined data tables.

7. Method for managing safety according to any of the previous claims, in which phase i) provides for issuing at least one notification signal containing information on said subset of protocols SPᵢ of predefined operations.

8. Method for managing safety according to any of the previous claims, in which, in addition to phase i), a phase j) is provided in which a check is made if one or more fields L' (L'₁, L'₂, ... L'ᵢ) of the fifth database L and if one or more data (F₁, F₂, ... Fᵢ) of the first database F take on predefined values.

9. Method for managing safety according to any one of claims 1 to 8, in which the phases of said method are carried out through a managing net (1) that includes a managing system (2) operatively connectable to one or more input/output units (3).

10. Method for managing safety according to claim 9, in which the transfer of information between said managing system (2) and said one or more input/output units (3) and vice-versa is carried out through an intranet network or through the Internet.

11. Computer program comprising software code portions suitable to be loaded in a processor memory to implement a method for managing safety according to any of claims 1 to 10.
